# EUROPEAN PATENT APPLICATION

(11) **EP 2 309 218 A1**
(43) Date of publication of application: **13.04.2011**
(21) Application number: 09172327.0
(22) Date of filing: 06.10.2009
(51) Int. Cl.: F28B 3/04, A23N 7/00, F28B 11/00

(54) **Recovery of heat from recurring charges of vapour**

(71) Applicant: BMA Nederland B.V., 3447 GV Woerden (NL)
(72) Inventor: Hafemann, Hartmut, 31275 Lehrte (DE); Caspers, Gerald, 38527 Meine (DE); van Loon, Erik, 4255 GC Nieuwendijk (NL)
(74) Representative: van Lookeren Campagne, Constantijn August

(57) **Abstract**

A method of facilitating a recovery of heat from recurring charges of vapour includes loading a charge of vapour into at least a first vessel (5). Heat transfer medium from a first source (21) is caused to pass through the first vessel (5) so as to absorb heat released by condensation of vapour in the first vessel (5). Condensation of the charge of vapour is continued by switching to causing heat transfer medium at a lower temperature, at least when reaching the first vessel (5), than first provided to pass through the first vessel (5).

## Description

The invention relates to a method of facilitating a recovery of heat from recurring charges of vapour, including:
loading a charge of vapour into at least a first vessel; and
causing heat transfer medium from at least one first source to pass through the first vessel so as to absorb heat released by condensation of vapour in the first vessel.

The invention also relates to an apparatus for facilitating a recovery of heat from recurring charges of vapour, including:
at least a first vessel, having a vapour inlet;
at least one flow control device for selectively connecting the vapour inlet to a process vessel to provide a charge of vapour from the process vessel to the first vessel;
at least one first source of a heat transfer medium;
at least one device for causing heat transfer medium from the first source to pass through the first vessel so as to absorb heat released by condensation of vapour in the first vessel.

The invention also relates to a use of such an apparatus and/or method.

The invention also relates to a computer program for a process control system.

WO 2004/047945 A1 discloses a method for condensing periodically and momentarily released large quantities of vapour, such as water vapour, with condensable and non-condensable gaseous components by condensing the condensable components of the vapour in an enclosed space by means of a cooling fluid, such as water, after which the heated cooling fluid and condensed components are together discharged from the enclosed space via a fluid discharge pipe. The vapour is led through and along a thermal buffer body having a relatively large thermal buffering mass and heat-exchanging surface, which is vertically arranged in the enclosed space, so that the periodically and momentarily released large quantities of vapour supplied from the bottom up are condensed while, simultaneously, periodically heating up the thermal buffer body, which is continuously cooled by coolant supplied from above, and flowing or dripping down. In the preferred embodiment, the thermal buffer body is built up from a number of plate assemblies, which are included in a frame.

A problem of the known method and apparatus is that the temperature of the coolant and condensate leaving the enclosed space, from which heat is generally recovered in a heat exchanger, is rather low for use in many applications.

It is an object of the invention to provide a method, apparatus, use and computer program that facilitate the recovery of heat from recurring charges of vapour and produce at least one of heat transfer medium and condensate at a relatively high temperature for at least some of the duration of the process of recovering heat from a charge of vapour.

This object is achieved by the method according to the invention, which is characterised by continuing condensation of the charge of vapour by switching to causing heat transfer medium at a lower temperature, at least when reaching the first vessel, than first provided to pass through the first vessel.

The heat transfer medium from the first source can be at a higher temperature than hitherto the case, so that it will also leave the first vessel at a higher temperature. This is also the case for the condensate. The higher temperature makes the heat transfer medium from the first source that has passed through the first vessel and/or the condensate generated in the first vessel more suitable for use in various heat exchangers. For example, the heat transfer medium can be used to heat air or another gas or gas mixture for use in drying products at a relatively high temperature. In a subsequent phase, condensation of the charge of vapour is continued by switching to causing heat transfer medium at a lower temperature than the heat transfer medium from the first source at least when reaching the first vessel, to pass through the first vessel. Because the (partial) vapour pressure is lower at lower temperatures, the heat transfer medium at the lower temperature ensures that the pressure in the first vessel decreases sufficiently for the first vessel to be at a required low pressure for transferring a next charge of vapour to it. This makes the method suitable for recovering heat from recurring charges of vapour, which are transferred to the first vessel through a pressure difference. In particular, the method is suitable for rapidly removing vapour from a process and transferring it to the first vessel. A pressure difference between the vapour in the process and the first vessel is responsible for the rapid transfer.

In addition to the energy savings obtained by more efficient recovery of heat (because the heat transfer medium originating from the first source and the condensate leave the first vessel at a relatively high temperature), the method has the added advantage that the condensation process is also effective in removing contaminants mixed with the vapour and arising in the process from which the vapour is removed and transferred to the first vessel.

In an embodiment, the heat transfer medium at a lower temperature is drawn from a second source, arranged to store heat transfer medium at a lower temperature than the first source.

This embodiment is more efficient than using a single first source and switching to providing additional cooling to obtain heat transfer medium at a lower temperature.

In an embodiment of the method, the first vessel is empty of solid objects in at least a central region comprising a majority of an interior of the first vessel.

This has the effect of avoiding contamination of the first vessel, making it suitable for condensing vapour from a wider range of processes, including recurring charges of vapour from, for example, a steam peeling device. A further effect is that the amount of material needed to build an apparatus for implementing the method is lower, since thermal masses in the vessel are dispensed with. In particular where the heat transfer medium passes directly through the interior of the first vessel, a higher flow rate is achieved, which further aids in keeping the first vessel free of contamination. Thus, cleaning and other maintenance requirements are reduced. Because large thermal masses within the first vessel are avoided, the heat transfer medium at the lower temperature need not also cool such thermal masses. This shortens the time of a cycle of the method.

In an embodiment, the heat transfer medium is sprayed into an interior of the first vessel.

This increases the effective area for absorbing heat from the condensing vapour. The process is therefore sufficiently fast. The rate of fluid flow of the heat transfer medium can be smaller for a given desired duration of a cycle of the method, further contributing to increased temperature of the heat transfer medium leaving the first vessel. The spraying allows one to reduce the thermal mass within the interior of the first vessel, because thermal mass is not required (or at least required to a lesser extent) to achieve rapid absorption of heat from the condensing vapour.

In an embodiment, the heat transfer medium is sprayed into the interior of the first vessel at a position in at least an upper half of the interior with a droplet size such that droplets are suspended over a majority of the height of the interior of the first vessel. In this embodiment, or in other embodiments in which the heat transfer medium is sprayed into the interior of the first vessel, a majority of droplets can have a diameter of 1 mm or lower.

Each of these measures further increases the available surface area for heat transfer.

An embodiment of the method includes, upon loading the charge of vapour from a process vessel into the first vessel, closing a connection between the process vessel and the first vessel and establishing a connection between the process vessel and at least one second vessel for transferring vapour from the process vessel to the at least one second vessel.

This embodiment is suitable for reducing the pressure of the process vessel to a certain desired level, in particular to generally atmospheric pressure, without having to use an extremely large first vessel. The or each second vessel is to this end evacuated to a lower pressure than the process vessel before the connection is established.

This embodiment of the method provides further effects where it is used in a method of recovering heat released by a steam peeling process, in particular a steam peeling process for peeling vegetables, e.g. potatoes. In such processes, a batch of products to be peeled is put into a process vessel, which is then filled with steam to a pressure of e.g. 16 bar. When the pressure is suddenly released, a flash effect occurs, in which water under the skin of the products to be peeled suddenly evaporates. When the pressure is back at atmospheric levels, the process vessel can be opened to remove the products. These are then brushed to remove the loosened skin. If the heat due to the steam has penetrated the vegetables too much or if the evaporation process has occurred not just at the surface of the vegetables but also deeper towards the centre, then the outer regions of the vegetable will have become overcooked and soft. This softer region tends to be removed as well in the brushing process. It is also undesirable from the point of view of further processing of the vegetables (cutting potatoes into strips for example) and yield losses. The use of at least one second vessel in addition to the first vessel for transferring vapour from the process vessel allows the flash effect to be controlled more precisely. In particular, it is possible to return the process vessel to atmospheric pressure, rather than to relatively low sub-atmospheric pressure levels. This helps prevent boiling and overcooking deep under the skin of the products being peeled. It is also possible to establish the atmospheric pressure in the process vessel more quickly, so that the process vessel can be opened earlier. This helps prevent continued transfer of heat from the relatively hot skins still in contact with the products to the products, because the skins can be removed earlier.

A variant of this embodiment includes, subsequent to a phase in which vapour is transferred to the at least one second vessel, closing a connection between the process vessel and a second vessel and establishing a connection for transferring vapour from the second vessel to the first vessel.

An effect of this variant is that the second vessel or vessels need not be provided with a pump to evacuate it or with a separate arrangement for causing the vapour in the second vessel to condense. Condensate will be collected at the bottom of the second vessel, of course, but much of the vapour transferred to the second vessel will be transferred to the first vessel as the pressure in the latter drops due to vapour condensing and giving up heat to the heat transfer medium passing through it.

In an embodiment of the method, vapour is transferred to at least the first vessel via a device for at least partly separating solid matter from a fluid.

In one variant, this device is situated between a process vessel that produces the recurring charges of vapour and the first vessel. In another variant, the device is situated between a vapour outlet of at least one second vessel and a vapour inlet of the first vessel. In an efficient embodiment, the same device is situated between both a vapour outlet of at least one second vessel and a vapour inlet of the first vessel and between a vapour outlet of the process vessel and the vapour inlet of the first vessel. The device makes the method suitable for facilitating the recovery of heat from vapour generated in processes in which contaminants are also generated. One example of such a process is a steam peeling process.

An embodiment of the method includes at least on of:
operating a vacuum pump connected to an outlet of the first vessel, at least during a phase in which the heat transfer medium from the second source is caused to pass through the first vessel; and
continuing condensation of the charge of vapour so as to establish a sub-atmospheric pressure level in the first vessel.

Operating a vacuum pump takes account of the fact that the charge of vapour transferred to the first vessel and generated in a particular process will generally be mixed with air. In order to ensure that the pressure in the first vessel is reduced sufficiently after each charge of vapour has been condensed, air must be removed from it as well, so that the method is indeed suitable for use in recovering energy from recurring charges of steam. An example of a process in which vapour mixed with steam will be produced is a steam peeling process, in which batches of products to be peeled are loaded into a process vessel that is then filled with steam.

Continuing condensation of the charge of vapour so as to establish a sub-atmospheric pressure level in the first vessel has the effect that the first vessel is at a sub-atmospheric pressure level prior to receiving a next charge of vapour. This next charge of vapour can be withdrawn from a process simply by establishing a connection between a process vessel and the first vessel. Generally, the process vessel will need to be returned to atmospheric pressure in order to remove process products from it. If the first vessel is at a sub-atmospheric pressure, then the process vessel can be returned to generally atmospheric pressure levels by simply establishing the connection, without using any pumps. Moreover, for a given volume of first vessel, more vapour can be received. Again, this is achievable without using any pumps to pump more vapour into the first vessel. A further effect of continuing condensation of the charge of vapour so as to establish a sub-atmospheric pressure level in the first vessel is to provide the potential for effecting a very rapid drop in pressure in the process vessel. This can be desirable in steam peeling processes, for instance.

In an embodiment of the method, at least heat transfer medium from the first source is transferred, after passing through the first vessel, to a first buffer store for supplying heat transfer medium to at least one heat exchanger.

An effect of this embodiment is that a constant flow of heat transfer medium at a particular temperature can be provided to a heat exchanger, despite the fact that heat transfer medium from the first source is not constantly caused to pass through the first vessel, indeed the first vessel is not constantly in a state in which vapour is being condensed. In particular where the method is being used to recover heat from periodically arising batches of vapour, the flow rate of heat transfer medium from the first buffer store to the heat exchanger can be set so as to balance a higher flow rate of heat transfer medium from the first source through the first vessel during only a fraction of the cycle of the method, so as to keep the volume of heat transfer medium in the first buffer store generally constant.

In a variant of this method, heat transfer medium is transferred from at least one of the heat exchangers to a second buffer store for supply to the first vessel.

Thus, this variant has the effect of providing heat transfer medium at a relatively low temperature, so that the second buffer store can in fact function as a second source of heat transfer medium, at a lower temperature than the heat transfer medium from the first source. In other embodiments, more than two sources of heat transfer medium, each at progressively lower temperatures are used, so that the second buffer store can correspond to a third or fourth store of heat transfer medium caused to pass through the first vessel. In this case, the same advantage of having an efficient cooling method to provide both heat transfer medium at a temperature corresponding to a low vapour pressure of the vapour to be condensed in the first vessel, and to make heat available from heat transfer medium passed through the first vessel is provided.

In an embodiment, the heat transfer medium at the lower temperature is transferred after passing through the first vessel to a buffer store included in a source of heat transfer medium from which heat transfer medium is caused to pass through the first vessel during a phase following loading of a subsequent charge of vapour into the first vessel.

This embodiment has the effect of making available a source of heat transfer medium at a relatively high temperature, for use early on in the process of condensing the next charge of vapour. In particular, the buffer store can be included in the first source of heat transfer medium.

According to another aspect, the apparatus according to the invention is characterised by an arrangement for switching from causing the heat transfer medium from the first source to pass through the first vessel to causing the heat transfer medium arranged to be at a lower temperature than the heat transfer medium from the first source at least when reaching the first vessel, to pass through the first vessel.

The apparatus is suitable for providing heat transfer medium at a relatively high temperature to a heat exchanger, expanding the range of applications for the heat exchanger or at least enabling the process of recovery of heat to be made more efficient. Also, however, the pressure in the first vessel can be reduced sufficiently to enable a rapid transfer of a next charge of vapour into the first vessel.

In an embodiment, the apparatus includes at least a second source of a heat transfer medium, and the switching arrangement is arranged to switch from causing the heat transfer medium from the first source to pass through the first vessel to causing heat transfer medium from the second source to pass through the first vessel, the heat transfer medium at the lower temperature being drawn from the second source.

In an embodiment of the apparatus, the first vessel is empty of solid objects in at least a central region comprising a majority of an interior of the first vessel.

In an embodiment, the apparatus includes at least one device for spraying heat transfer medium into an interior of the first vessel.

In a variant of this embodiment, at least one nozzle of the device for spraying heat transfer medium into an interior of the first vessel is located in an upper half of the interior and arranged to produce spray with a droplet size such that droplets are suspended over a majority of the height of the interior of the first vessel, in particular spray in which a majority of droplets have a diameter of 1 mm or lower.

In an embodiment, the apparatus includes:
at least one device for selectively connecting a process vessel to the first vessel to load the charge of vapour from the process vessel into the first vessel;
at least one second vessel; and
at least one device for establishing a connection between the process vessel and the at least one second vessel for transferring vapour from the process vessel to the at least one second vessel upon closing the connection between the process vessel and the first vessel.

In a variant of this embodiment, the apparatus includes at least one device for establishing a connection for transferring vapour from the at least one second vessel to the first vessel upon closing a connection between the process vessel and a second vessel.

In an embodiment, the apparatus includes a device for at least partly separating solid matter from a fluid, positioned before a vapour inlet of the first vessel.

In an embodiment, the apparatus includes a vacuum pump attached to an outlet of the first vessel, and arranged to be operated at least during a phase in which the heat transfer medium from the second source is caused to pass through the first vessel.

In an embodiment, the apparatus includes at least a first buffer store for supplying heat transfer medium to at least one heat exchanger,
which first buffer store is arranged to receive heat transfer medium caused to pass through the first vessel, and
at least one flow control device for selectively transferring the heat transfer medium from the first source after passing through the first vessel to the first buffer store.

The at least one flow control device is operable to enable a transfer of heat transfer medium to the first buffer store when heat transfer medium from the first source is caused to pass through the first vessel, but not when heat transfer medium from another source is caused to pass through the first vessel.

In a variant, the apparatus includes a second buffer store, arranged to receive heat transfer medium from at least one of the heat exchangers and at least temporarily to supply heat transfer medium to the first vessel.

In an embodiment, in which the apparatus includes at least a second source of a heat transfer medium, and the switching arrangement is arranged to switch from causing the heat transfer medium from the first source to pass through the first vessel to causing heat transfer medium from the second source to pass through the first vessel, the heat transfer medium at the lower temperature being drawn from the second source, the apparatus further includes a further buffer store arranged to receive heat transfer medium from only the second of the first and second sources after this heat transfer medium has passed through the first vessel, which further buffer store is included in a source of heat transfer medium for supply to the first vessel.

According to another aspect, the invention comprises the use of a method according to the invention and/or an apparatus according to the invention to recover heat released by a steam peeling apparatus.

According to another aspect of the invention, there is provided a computer program including a set of instructions capable, when incorporated in a machine-readable medium, of causing a process control system to cause the performance of a method according to the invention.

The invention will be explained in further detail with reference to the accompanying drawings, in which:
Fig. 1 is a diagram of an apparatus for recovering energy from recurring charges of steam generated in a steam peeler in a first phase of a method of facilitating the energy recovery;
Fig. 2 is a diagram of the apparatus of Fig. 1 in a second phase;
Fig. 3 is a diagram of the apparatus of Figs. 1 and 2 in a third phase;
Fig. 4 is a diagram of the apparatus of Figs. 1-3 in a fourth phase; and
Fig. 5 is a flow chart describing steps of first and second phases in a cycle of the method of facilitating the energy recovery; and
Fig. 6 is a flow chart describing steps of third and fourth phases in a cycle of the method of facilitating the energy recovery.

A method of recovering heat from recurring charges of vapour will be described herein using the example of a steam peeler 1 as an example of an apparatus that produces recurring charges of vapour. The steam peeler 1 has an inlet 2 for receiving products to be peeled, e.g. fruit or vegetables, for example potatoes.

In operation, the products to be peeled are put into the steam peeler 1, the inlet 2 is closed, and saturated steam is fed into the steam peeler 1 by opening a valve 3 in a conduit leading from a source of saturated steam (not shown) to the steam peeler 1. The pressure in the steam peeler 1 rises to a level several times atmospheric pressure, e.g. above 10 bar, for example between 15 and 20 bar. The steam condenses on the skin of the products to be peeled, heating the surface of the products. Then, the pressure is released in a short period of time in a manner to be described more fully below. As a result, water under the skin evaporates in a rapid manner, removing the skin. After the pressure has returned to atmospheric pressure, the inlet 2 can be opened to remove the peeled products. The process is then repeated with a next batch of products to be peeled. Thus, steam is released repeatedly. This steam entrains air, which has entered the steam peeler 1 with the products, as well as peel and contaminants, e.g. volatile compounds.

The apparatus to be described herein enables energy to be recovered from the recurring quantities of steam released by the steam peeler 1 by condensing the steam. In the process, volatile components and other contaminants are also captured, so that the release of odours to the atmosphere is largely prevented.

The method implemented using the apparatus operates in cycles. Each cycle can be thought of as comprising four phases.

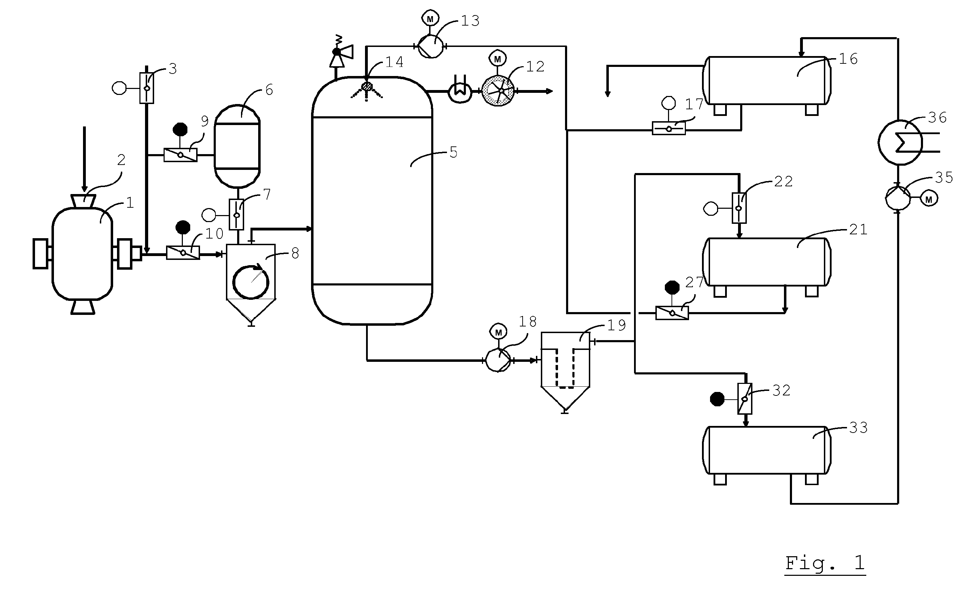

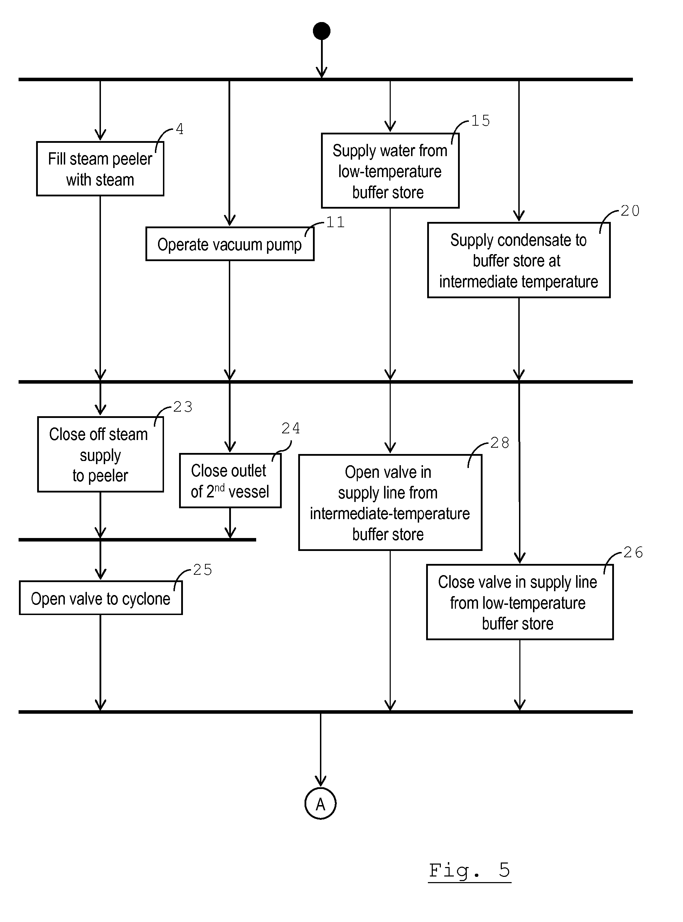

In a first phase (Figs. 1 and 5), referred to herein as the evacuation phase, saturated steam is supplied (step 4) to the steam peeler by opening the valve 3. At the same time, a first vessel 5 and a second vessel 6 are evacuated. There is an open connection allowing for the transfer of vapour and gases from the second vessel 6 to the first vessel 5. This connection is established by opening a valve 7 in a conduit from the second vessel 6 to a cyclone 8. Instead of or in addition to the cyclone 8, a different type of device for at least partly separating solid matter from a fluid is used in another embodiment. This can be a further vessel (not shown), in which vapour is discharged tangentially so as to slow it down to the point that the solid matter collects at the bottom of the further vessel.

A valve 9 in a conduit from the steam peeler 1 to the second vessel 6 is kept closed, so that the second vessel is isolated from the steam peeler 1. Similarly, a valve 10 in a conduit from the steam peeler 1 to the cyclone 8 is also kept closed, so that the cyclone and thus the first vessel 5 are kept isolated from the steam peeler 1. In the illustrated embodiment, the steam supply line, the conduit in which the valve 9 to the second vessel is located and the conduit in which the valve 10 is located all branch off from a single conduit for providing and receiving steam to and from the process vessel comprised in the steam peeler 1. This makes the process vessel cheaper to construct.

Because there is a connection between the second vessel 6 and the first vessel 5, separate evacuation means for the second vessel 6 are not required.

The first vessel 5 is about ten times larger in volume than the second vessel 6. In one example, the first vessel 5 has a volume in the order of 50 m³ and the second vessel has a volume in the order of 5 m³.

To evacuate the first vessel 5 and the second vessel 6, gases, in particular air, are removed by operating (step 11) a vacuum pump 12, e.g. a liquid ring pump. The majority of the pressure decrease is, however, achieved by condensing steam in the first vessel 5. To this end, a liquid heat transfer medium, in this case water, is sprayed into the first vessel 5 by operating a supply pump 13 arranged to pump water through a nozzle 14. The nozzle 14 and supply pressure are such that water droplets with a diameter in the order of 1 mm are generated. These are of a sufficient size to generate a suspended mist of water droplets in the first vessel 5.

The water pumped (step 15) by the supply pump 13 originates from a buffer store 16 arranged to store relatively cold water. A typical temperature would be a value in the range between 30 °C and 60°C, more preferably between 40 °C and 50 °C, e.g. about 45 °C. Because water is not continually sourced from the low-temperature buffer store 16, a valve 17 is present in a conduit leading from the low-temperature buffer store 16, which is kept open during the evacuation phase.

Condensate and water from the low-temperature buffer store 16 that has been caused to pass through the interior of the first vessel 5 are collected at the bottom of the latter. They are pumped away by operating a further pump 18, and passed through a filter 19. This water is then delivered (step 20) to an intermediate-temperature buffer store 21, to which end a valve 22 is kept open. The water in the intermediate-temperature buffer store 21 is at a temperature between 50 °C and 100 °C, preferably between 60 °C and 80°C, in particular at around 70 °C.

In an embodiment, the evacuation phase lasts for up to less than twenty seconds, e.g. about fifteen seconds. This will be between one fifth and one third of the total cycle time. At least at the end of the evacuation phase, the first vessel 5 and the second vessel 6 will be at a pressure level below atmospheric pressure, in particular at a value below 0.5 bar, e.g. around 0.3 bar.

During the evacuation phase, the steam peeler 1 is in a cooking phase, in which the products to be peeled are heated, at least at their surface.

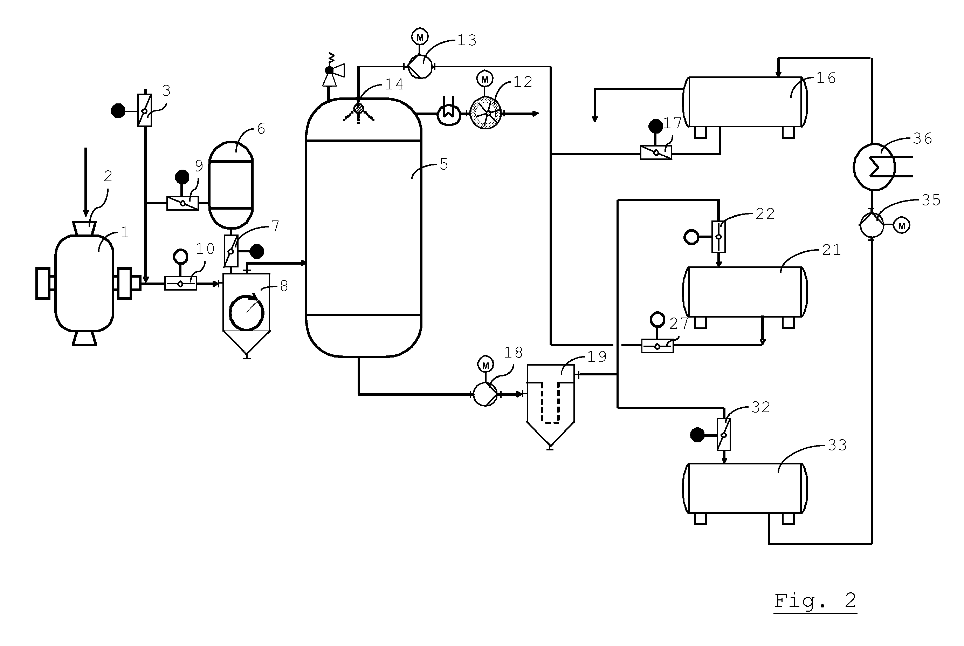

After the evacuation phase has been completed, a relatively short pressure equalisation phase is carried out (Figs. 2 and 5). The steam supply to the steam peeler 1 is closed (step 23) by operating the appropriate valve 3. The valve 9 in the conduit leading to the second vessel 6 is kept closed. The valve 7 situated between the second vessel and the cyclone 8 is closed (step 24). Then, the valve 10 in the conduit leading from the steam peeler 1 to the cyclone 8 is opened (step 25) very suddenly. This leads to the rapid transfer of a charge of vapour, mixed with gases, peel and contaminants from the steam peeler 1 to the cyclone 8, where the peel and at least some solid contaminants are separated, and on to the first vessel 5.

Upon pressure equalisation, which takes about one fortieth of the cycle, e.g. about 1 s., the pressure in the first vessel 5 is at about 1.5 bar, and the temperature is above 100 °C.

In the illustrated embodiment, the valve 17 in the supply line from the low-temperature buffer store 16 is closed (step 26), and a valve in a supply line from the intermediate-temperature buffer store 21 is opened (step 28). Thus, water at a relatively high temperature at least when entering the first vessel 5 is caused to pass through the first vessel.

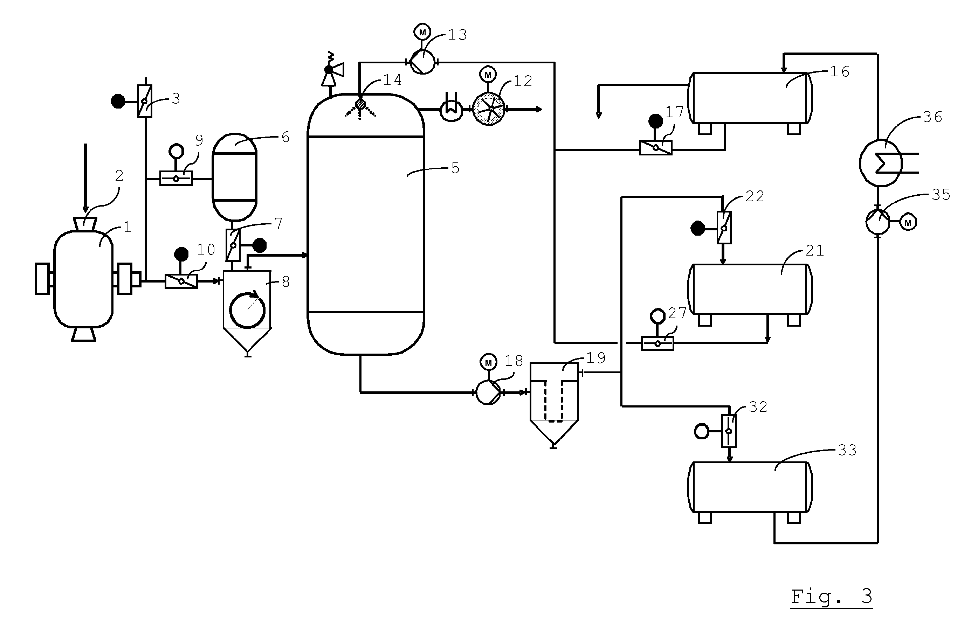

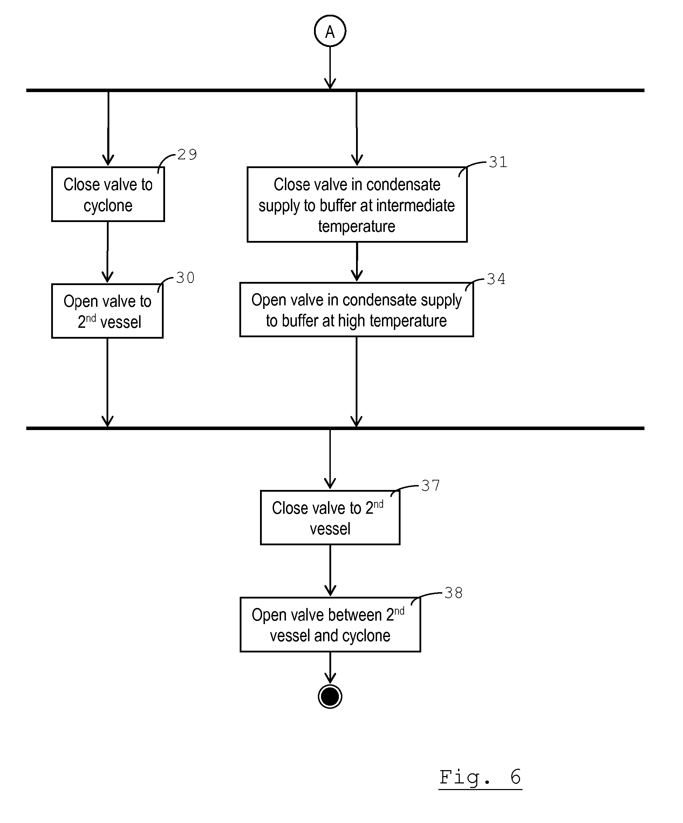

Following the relatively short pressure equalisation phase, the process enters a pressure release phase (Figs. 3 and 6), in which the pressure in the steam peeler 1 is reduced to a generally atmospheric pressure level. This is effected by closing (step 29) the valve in the conduit leading directly to the cyclone 8 and opening (step 30) the valve 9 in the conduit leading from the steam peeler 1 to the second vessel 6. The valve 7 in the conduit connecting the second vessel 6 to the cyclone 8 is kept closed.

At the same time, energy is recovered by causing condensation of the vapour in the first vessel 5. The water originating from the intermediate-temperature buffer store 21 is not returned to the latter after being caused to pass through the first vessel 5. Instead, a valve 22 in a conduit leading to the intermediate-temperature buffer store 21 is closed (step 31). A valve 32 in a conduit leading from the first vessel 5 to a high-temperature buffer store 33 is opened (step 34). The high-temperature buffer store 33 collects water at a relatively high temperature, e.g. above 80 °C, preferably above 90 °C. This temperature is much higher than temperatures achieved in known processes, and is due to the fact that the water entering the first vessel 5 is already at a higher temperature than in most known processes. In order nevertheless to achieve a sufficiently large reduction in vapour pressure before a next cycle begins, a switch is made between supplying water from the intermediate-temperature buffer store 21 to supplying water from the low-temperature buffer store 16, as will be explained.

It is noted that a further pump 35 is continually operated to supply water from the high-temperature buffer store 33 to a heat exchanger 36 during all the phases of the cycle. Thus, the heat exchanger is operated continuously, even though vapour is only retrieved at intervals. To this end, the rate of fluid flow to the first vessel 5 is larger than the rate of fluid flow through the heat exchanger 36, e.g. several times larger, for example four to five times larger.

After giving up heat in the heat exchanger 36, the water is at a relatively low temperature, so that it can be supplied to the low-temperature buffer store 16. The latter is provided with an overflow, since the condensing steam adds water to the cycle.

Because of the relatively high temperature of the water supplied to the heat exchanger 36 the latter can be used to supply heat to a larger range of processes, and more heat can be recovered. In one example, the heat is used to dry the peeled products. In particular, peeled potatoes that have been cleaned and blanched can be dried using hot air heated using the heat exchanger 36.

The pressure release phase lasts for about one-seventh to one-eighth of the cycle, e.g. about five seconds for a thirty-five to forty second cycle.

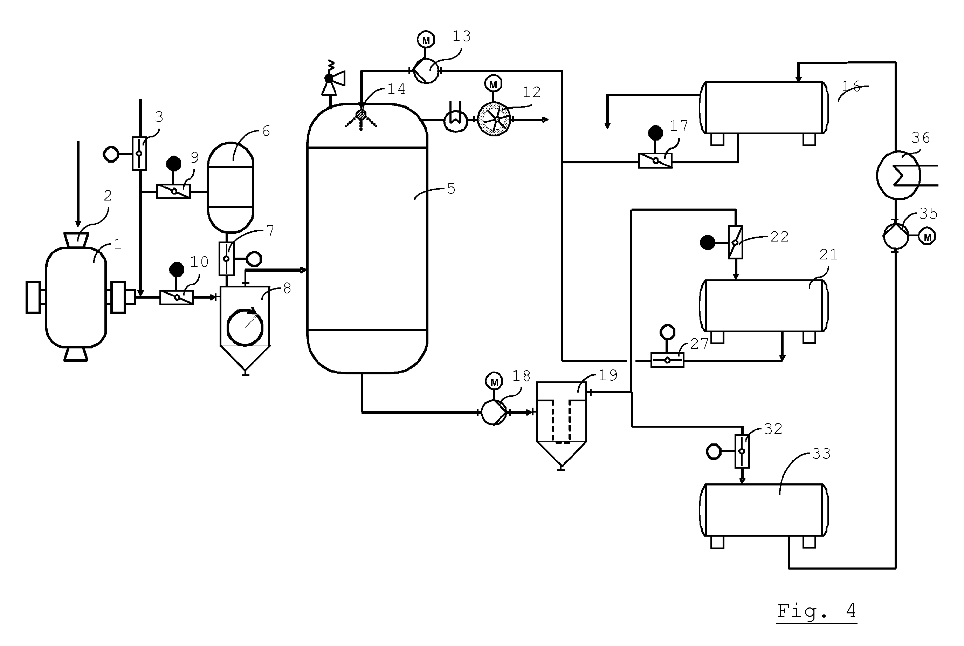

Then follows a heat recovery phase (Figs. 4 and 6), in which the process of recovering heat by causing water from the intermediate-temperature buffer store 21 to pass through the first vessel and collecting this water with condensate in the high-temperature buffer store 33 continues. This phase commences when the valve to the second vessel 9 is closed (step 37) and the valve 7 from the second vessel 6 to the cyclone 8 is opened (step 38). Thus, the lowering of the pressure in the first vessel 5 and the removal of vapour and gases from it also lead to a lowering of the pressure in the second vessel 6 and a lowering of the pressure in it. It is noted that the connection of the second vessel 6 to the first vessel 5 is via the cyclone 8, so that only one cyclone is needed. There is no cyclone between the steam peeler 1 and the second vessel 6. This helps achieve rapid pressure equalisation between the process vessel in the steam peeler 1 and the second vessel 6.

At the end of the heat recovery phase, the pressure in the first vessel 5 and in the second vessel 6 is already below atmospheric pressure, at a value between 0.5 and 1 bar, e.g. about 0.8 bar. However, to reduce the pressure even further, a switch is made to the evacuation phase (Figs. 1 and 5). This switch involves closing the valve 27 in the supply line from the intermediate-temperature buffer store 21 and opening the valve 17 in the supply line from the low-temperature buffer store 16. The valve 32 in the supply line to the high-temperature buffer store 33 is closed, and the valve 22 in the supply line to the intermediate-temperature buffer store 21 is opened.

Thus, no or very little vapour is vented to the atmosphere, the steam peeler 1 can be evacuated to generally atmospheric pressure, and the heat exchanger 36 is supplied with water at a relatively high temperature. Heat is recovered from both the condensate and the heat transfer medium, because they are both the same substance (water) and leave the first vessel through a common outlet.

In one example, the heat exchanger 36 was operative to supply around 1150 kW, using a first vessel 5 with a volume of about 55 m³ and a second vessel 6 with a volume of about 5 m³. The cycle time was about 35 s, and the rate of fluid flow into the first vessel 5 was about 90 m³/h.

The invention is not limited to the embodiments described above, which may be varied within the scope of the accompanying claims. The features in the claims can be essential to the invention both individually and in any combination.

It is noted, for example, that the apparatus for recovery of heat from vapour can be used in conjunction with other processes in which pressurised vapour is released at intervals, e.g. periodically. Examples of such processes include processes for the sterilisation of organic matter (preserves, organic waste) or soil, periodic cooking processes and processes conducted in autoclaves.

In the illustrated embodiment, the process illustrated in Figs. 5 and 6 is carried out under the control of a process control system, comprising at least one suitably programmed data processing system (not shown in detail). The process control system ensures that the correct control signals are provided to the valves 3, 7, 9, 10, 17, 22, 27 and pumps 12, 13, 18 and 35.

## Claims

1. Method of facilitating a recovery of heat from recurring charges of vapour, including:
loading a charge of vapour into at least a first vessel (5); and
causing heat transfer medium from at least one first source (21) to pass through the first vessel (5) so as to absorb heat released by condensation of vapour in the first vessel (5), **characterised by**
continuing condensation of the charge of vapour by switching to causing heat transfer medium at a lower temperature, at least when reaching the first vessel (5), than first provided to pass through the first vessel (5).

2. Method according to claim 1, wherein the heat transfer medium at a lower temperature is drawn from a second source (16), arranged to store heat transfer medium at a lower temperature than the first source (21).

3. Method according to claim 1 or 2, wherein the first vessel (5) is empty of solid objects in at least a central region comprising a majority of an interior of the first vessel (5).

4. Method according to any one of the preceding claims, wherein the heat transfer medium is sprayed into an interior of the first vessel (5).

5. Method according to claim 4, wherein the heat transfer medium is sprayed into the interior of the first vessel (5) at a position in at least an upper half of the interior with a droplet size such that droplets are suspended over a majority of the height of the interior of the first vessel (5), in particular such that a majority of droplets have a diameter of 1 mm or lower.

6. Method according to any one of the preceding claims, including, upon loading the charge of vapour from a process vessel (1) into the first vessel (5), closing a connection between the process vessel (1) and the first vessel (5) and establishing a connection between the process vessel (1) and at least one second vessel (6) for transferring vapour from the process vessel (1) to the at least one second vessel (6).

7. Method according to claim 6, including, subsequent to a phase in which vapour is transferred to the at least one second vessel (6), closing a connection between the process vessel (1) and a second vessel (6) and establishing a connection for transferring vapour from the second vessel (6) to the first vessel (5).

8. Method according to any one of the preceding claims, wherein vapour is transferred to at least the first vessel (5) via a device (8) for at least partly separating solid matter from a fluid.

9. Method according to any one of the preceding claims, including at least one of:
operating a vacuum pump (12) connected to an outlet of the first vessel (5), at least during a phase in which the heat transfer medium from the second source (16) is caused to pass through the first vessel (5); and
continuing condensation of the charge of vapour so as to establish a sub-atmospheric pressure level in the first vessel (5).

10. Method according to any one of the preceding claims, wherein at least heat transfer medium from the first source (21) is transferred, after passing through the first vessel (5), to a first buffer store (33) for supplying heat transfer medium to at least one heat exchanger (36).

11. Method according to claim 10, wherein heat transfer medium is transferred from at least one of the heat exchangers (36) to a second buffer store (16) for supply to the first vessel (5).

12. Method according to any one of the preceding claims, wherein the heat transfer medium at the lower temperature is transferred after passing through the first vessel to a buffer store (21) included in a source (21) of heat transfer medium from which heat transfer medium is caused to pass through the first vessel (5) during a phase following loading of a subsequent charge of vapour into the first vessel (5).

13. Apparatus for facilitating a recovery of heat from recurring charges of vapour, in particular an apparatus for carrying out a method according to any one of the preceding claims, including:
at least a first vessel (5), having a vapour inlet;
at least one flow control device (10) for selectively connecting the vapour inlet to a process vessel (1) to provide a charge of vapour from the process vessel (1) to the first vessel (5);
at least one first source (21) of a heat transfer medium;
at least one device (13,14,18) for causing heat transfer medium from the first source (21) to pass through the first vessel (5) so as to absorb heat released by condensation of vapour in the first vessel (5), **characterised by**
an arrangement (17,27) for switching from causing the heat transfer medium from the first source (21) to pass through the first vessel (5) to causing the heat transfer medium arranged to be at a lower temperature than the heat transfer medium from the first source (21) at least when reaching the first vessel (5), to pass through the first vessel (5).

14. Use of a method according to any one of claims 1-12 and/or an apparatus according to claim 13 to recover heat released by a steam peeling apparatus (1).

15. Computer program including a set of instructions capable, when incorporated in a machine-readable medium, of causing a process control system to cause the performance of a method according to any one of claims 1-12.
